# FASCICULE DE BREVET EUROPEEN

(11) **EP 1 505 030 B1**
(45) Date de publication et mention de la délivrance du brevet: **22.10.2008**
(21) Numéro de dépôt: 04300482.9
(22) Date de dépôt: 27.07.2004
(51) Int. Cl.: B66B 11/04, H02K 7/10

(54) **Machine électrique, notamment pour ascenseur**
Elektrische Maschine, insbesondere für einen Aufzug
Electrical machine, in particular for an elevator

(30) Priorité: 08.08.2003 FR 0309784
(43) Date de publication de la demande: 09.02.2005
(73) Titulaire: MOTEURS LEROY-SOMER, 16000 Angouleme (FR)
(72) Inventeur: Gauthier Pascal, 16290 Asnieres-sur-Nouere (FR); Gilles, Christophe, 16730 Fleac (FR); Beynaud Pascal, 16290 Saint-Saturnin (FR); Rey Christian, 16730 Linars (FR)
(74) Mandataire: Tanty, François

(56) Documents cités:
- EP-A- 0 834 463
- EP-A- 0 970 912
- EP-A- 1 057 772
- US-A- 5 018 603

## Description

La présente invention concerne les machines électriques et plus particulièrement mais non exclusivement celles destinées à entraîner les ascenseurs.

Les demandes EP-A2-1 057 772, EP-A1-0 834 463, EP-A2-0 970 912 et le brevet US 5 018 603 concernent des machines d'entraînement d'ascenseurs dépourvues d'un arbre central creux du bâti à l'intérieur duquel court un câble électrique d'alimentation du stator.

La demande EP-11-0 220 981 concerne un rotor d'alternateur de véhicules automobiles.

Le brevet US 4 458 228 a pour objet un dispositif pour positionner une valve de carburateur.

Le brevet EP 6 057 616 a pour objet un moteur d'entraînement d'un disque dur de stockage de données comportant un arbre disposé verticalement.

Il existe un besoin pour disposer d'une machine qui soit d'un fonctionnement fiable et d'un faible encombrement, afin notamment de faciliter son implantation dans une cage d'ascenseur.

Il existe encore un besoin pour disposer d'une machine qui soit relativement facile à fabriquer et de réparation aisée, le cas échéant.

L'invention vise à répondre à ces besoins.

L'invention a pour objet une machine électrique telle que définie dans la revendication 1.

Par l'expression « se situe au moins parallèlement autour de l'arbre », il faut comprendre qu'il existe au moins un plan perpendiculaire à l'axe géométrique de rotation qui coupe à la fois l'arbre et la surface d'entraînement.

La surface d'entraînement se situe de préférence au moins en majeure partie, autour de l'arbre, voire sensiblement en totalité.

La position de la surface d'entraînement, proche du bâti, permet de réduire les contraintes associées au montage en porte-à-faux, et par là d'alléger la structure du bâti.

La traversée de l'arbre creux par le câble relié au stator permet de gagner en compacité.

Une telle disposition facilite également la construction de la machine, notamment l'accès au stator.

L'invention permet ainsi d'implanter ou de remplacer plus facilement le stator, en cours ou après la fabrication, par exemple pour adapter la machine à une demande particulière en utilisant un stator spécifique.

L'invention permet encore d'utiliser, le cas échéant, un moteur plus long, plus puissant, tout en conservant la surface d'entraînement proche du bâti.

La surface d'entraînement peut comporter des gorges de réception de câbles ou courroies entraînés par la machine.

Dans un exemple particulier de mise en oeuvre de l'invention, le rotor comporte un disque, orienté perpendiculairement à l'axe géométrique de rotation du rotor, et le bâti peut porter au moins un frein comportant un organe de friction agencé pour s'appliquer sur ce disque, par exemple deux freins disposés sur des côtés sensiblement opposés du bâti.

Le disque peut se situer entre le bâti et la surface d'entraînement.

La machine peut comporter, du côté opposé à l'extrémité de l'arbre par laquelle sort le câble relié au stator, un capot amovible. Ce capot peut recouvrir une tige tournant avec le rotor et entraînant en rotation un axe d'un capteur de position. L'enlèvement de ce capot permet d'accéder aisément au stator, aux connections électriques et au capteur.

La liaison entre la tige et l'axe du capteur peut être rigide ou en variante souple ou permettre un déplacement de la tige relativement à l'axe, par exemple grâce à une ouverture pratiquée dans l'axe et traversée par la tige.

Le rotor peut comporter une surface intérieure cylindrique de révolution, sur laquelle des aimants permanents sont fixés, par exemple par collage.

Le stator peut être boulonné sur l'arbre, ce qui facilite son montage et son remplacement éventuel.

Le rotor peut comporter un corps monobloc portant les aimants et dans lequel sont usinées le cas échéant les gorges de réception des câbles ou courroies destinés à être entraînés par la machine.

L'arbre peut présenter une structure monobloc ou être formé par l'assemblage de deux manchons coaxiaux.

L'invention pourra être mieux comprise à la lecture de la description détaillée qui va suivre, d'exemples de mise en oeuvre non limitatifs de celle-ci, et à l'examen du dessin annexé, sur lequel :
- les figures 1 et 2 sont deux vues en perspective sous des angles différents d'un exemple de machine réalisée conformément à l'invention,
- la figure 3 est une coupe axiale schématique de la machine des figures 1 et 2, et
- la figure 4 représente un détail de réalisation d'une variante de mise en oeuvre de l'invention.

La machine électrique 1 représentée sur les figures est destinée à l'entraînement de câbles d'ascenseur non représentés et comporte un bâti 2 destiné à être fixé par exemple sur un élément de structure d'une cage d'ascenseur.

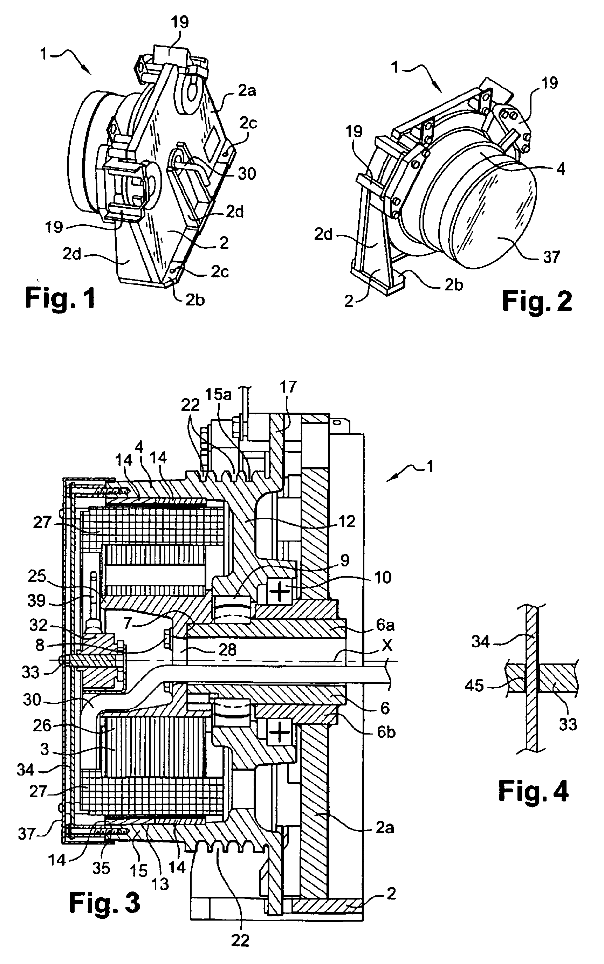

Ce bâti 2 porte un stator 3 que l'on peut voir en coupe sur la figure 3.

La machine 1 comporte également un rotor 4 tournant relativement au bâti 2 et au stator 3 autour d'un axe géométrique de rotation X.

Le bâti 2 comporte un flasque 2a, s'étendant perpendiculairement à l'axe X, pourvu à sa base de rebords 2b munis d'orifices 2c destinés au passage d'éléments de fixation sur la structure de support.

Des nervures 2d permettent de rigidifier le flasque 2a.

Le bâti 2 comporte un arbre fixe creux 6, métallique, qui s'étend coaxialement à l'axe X et à une extrémité axiale 7 duquel est fixé par des boulons 8 le stator 3. Le rotor 4 est monté sur des roulements 9 et 10 portés par des surfaces cylindriques de révolution de l'arbre 6.

Dans l'exemple considéré, l'arbre 6 est réalisé par assemblage d'un manchon intérieur 6a et d'un manchon extérieur 6b, les deux manchons étant coaxiaux.

Le manchon extérieur 6b est soudé sur le flasque 2a tandis que le manchon intérieur 6a est soudé à l'intérieur du manchon extérieur 6b et s'étend hors de celui-ci en s'éloignant du flasque 2a pour servir de support au roulement 9.

Les manchons 6a et 6b sont chacun épaulés pour permettre aux roulements correspondants 9 et 10 de venir axialement en appui dessus.

En variante, l'arbre 6 pourrait être monobloc.

Dans l'exemple de réalisation considéré, le rotor 4 comporte un corps monobloc 12 qui comporte une jupe tubulaire 15 dont une portion 13 de la surface intérieure est cylindrique de révolution d'axe X.

Des aimants permanents 14 sont fixés, par exemple par collage, sur cette portion 13.

Le corps 12 comporte également un disque 17 qui se raccorde à l'extrémité de la jupe 15 adjacente au bâti 2 et sur lequel peuvent venir en prise des mâchoires de freins 19 connus en eux-mêmes, afin de freiner le rotor, par exemple en l'absence d'alimentation électrique du stator 3. Les freins 19 sont par exemple à commande électrique et comportent des mâchoires revêtues de garnitures de friction qui viennent enserrer le disque 17 lors du freinage.

Des gorges 22 sont réalisées sur une surface d'entraînement extérieure 15a de la jupe 15, à proximité de l'extrémité de celle-ci adjacente au disque 17, pour recevoir les câbles ou courroies à entraîner.

Compte tenu de la proximité de la surface 15a et du flasque 2a, le porte-à-faux et les contraintes en résultant sont réduits.

Le stator 3 comporte un élément central 25 fixé de manière amovible par les boulons 8 sur l'arbre creux 6 et servant de support à un paquet de tôles 26 définissant des dents sur lesquelles sont engagés des bobinages 27.

Le stator est bobiné sur dents, chaque dent portant un bobinage qui lui est propre, ce type de bobinage étant encore désigné par la terminologie anglo-saxonne « concentrated winding ». Le stator pourrait encore, en variante, être bobiné autrement.

L'élément central 25 comporte une ouverture centrale 28 permettant le passage d'un câble 30 d'alimentation des bobinages 27 du stator, ce câble 30 parcourant intérieurement l'arbre 6 et se prolongeant à l'extérieur de la machine pour être raccordé à un variateur, par exemple. Le câble 30 comporte par exemple quatre conducteurs de 6 mm² de section.

La machine comporte également un capteur de position 32 représenté schématiquement à la figure 3, comportant un axe rotatif 33 tournant avec le rotor, en étant entraîné par une tige 34 fixée par des vis 35 à l'extrémité de la jupe 15 opposée au disque 17.

La tige 34 est recouverte par un capot 37 de protection, qui tourne avec le rotor.

Le capteur de position 32 délivre une information concernant la position du rotor relativement au stator, information qui est acheminée par un câble 39 non entièrement apparent sur la figure 3, qui traverse également l'ouverture 28 et parcourt intérieurement l'arbre 6 pour déboucher à l'extérieur du moteur du côté du bâti 2.

On comprend que l'invention permet un accès facilité au stator 30, puisque pour ce faire il suffit d'enlever le capot de protection 27.

Bien entendu, l'invention n'est pas limitée à l'exemple de réalisation qui vient d'être décrit.

En particulier, la machine électrique peut servir à entraîner non pas un ascenseur mais par exemple un pneumatique dans le cas d'une roue motrice, ou un treuil.

Le moteur électrique peut encore être réalisé différemment, notamment en ce qui concerne le montage des aimants et la disposition des bobinages du stator.

Dans l'exemple illustré, le moteur s'étend pratiquement entièrement à l'intérieur de la pièce dans laquelle sont réalisées les gorges d'entraînement des câbles ou courroies mais un moteur plus long pourrait être utilisé sans modifier le positionnement desdites gorges relativement au flasque du bâti.

La tige 34 peut, comme illustré sur la figure 4, traverser une ouverture 45 de l'axe 33 du capteur de position, avec une possibilité de mouvement relativement à cet axe 33. Cela peut permettre de réduire les contraintes mécaniques qui s'exercent sur l'axe 33 en cas d'excentricité du rotor.

Dans toute la description, y compris les revendications, l'expression « comportant un » doit être comprise comme étant synonyme de « comportant au moins un », sauf si le contraire est spécifié.

## Revendications

1. Machine électrique (1) pour entraîner un ascenseur, une roue, ou un treuil, **caractérisée par le fait qu'**elle comporte :
- un bâti (2) de support,
- un stator (3) fixé en porte-à-faux sur le bâti (2),
- un rotor (4) monté rotatif sur le bâti autour d'un axe géométrique de rotation (X) de façon à pouvoir être entraîné par le stator,
le bâti comportant un arbre central creux (6), coaxial à l'axe géométrique de rotation du rotor, un câble électrique d'alimentation du stator parcourant intérieurement l'arbre (6) et le rotor présentant une surface d'entraînement (15a) destinée à transmettre le couple à au moins un élément à entraîner, tel que par exemple un câble ou une courroie, qui se situe au moins partiellement autour de l'arbre, notamment à proximité immédiate du bâti, le rotor étant monté en porte-à-faux sur des roulements (9, 10) portés par des surfaces cylindriques de révolution de l'arbre.

2. Machine selon la revendication 1, **caractérisée par le fait que** la surface d'entraînement (15a) se situe au moins en majeure partie autour de l'arbre (6).

3. Machine selon la revendication 1 ou 2, **caractérisée par le fait qu'**un câble (39) relié à un capteur de position (32) parcourt intérieurement l'arbre (6).

4. Machine selon l'une quelconque des revendications précédentes, **caractérisée par le fait que** la surface d'entraînement (15a) comporte des gorges (22) de réception de câbles ou courroies entraînés par la machine.

5. Machine selon l'une quelconque des revendications précédentes, **caractérisée par le fait que** le rotor comporte un disque (17) orienté perpendiculairement à l'axe géométrique de rotation (X) et **par le fait que** le bâti porte au moins un frein (19) comportant un organe de friction agencé pour s'appliquer sur ce disque (17).

6. Machine selon l'une quelconque des revendications précédentes, **caractérisée par le fait qu'**elle comporte, du côté opposé à l'extrémité de l'arbre par laquelle sort(ent) le ou les câbles parcourant intérieurement celui-ci, un capot amovible (37).

7. Machine selon la revendication précédente, **caractérisée par le fait que** le capot amovible recouvre une tige (34) tournant avec le rotor et entraînant en rotation un axe (33) d'un capteur de position.

8. Machine selon la revendication 7, **caractérisée par le fait que** l'axe (33) comporte une ouverture (45) traversée par la tige (34).

9. Machine selon l'une quelconque des revendications précédentes, **caractérisée par le fait que** le rotor comporte une surface intérieure (13) cylindrique de révolution, sur laquelle des aimants permanents (14) sont fixés.

10. Machine selon l'une quelconque des revendications précédentes, **caractérisée par le fait que** le stator est boulonné sur l'arbre (6).

11. Machine selon l'une quelconque des revendications précédentes, **caractérisée par le fait que** le rotor comporte un corps (12) monobloc, portant des aimants (14) et dans lequel sont usinées des gorges (22) de réception de courroies ou câbles destinés à être entraînés par la machine.

12. Machine selon l'une quelconque des revendications précédentes, **caractérisée par le fait que** l'arbre (6) est formé par l'assemblage de deux manchons (6a, 6b) coaxiaux.

## Claims

1. An electrical machine for driving at least one of an elevator, a tire or a winch, **characterized by** the fact that it comprises:
- a supporting structure (2);
- a stator (3) cantilevered-out from the structure (2) ; and
- a rotor (4) mounted to rotate on the structure about a geometrical axis (x) of rotation in a such a manner as to be capable of being driven by the stator,
the supporting structure comprising a hollow central shaft (6) coaxial about the axis of rotation of the rotor, an electric cable for powering the stator traveling along the inside of the shaft (6), and the rotor presenting a drive surface (15a) for transmitting torque to at least one element that is to be driven such as for example a cable or a belt, and situated at least in part around the shaft, in particular in the immediate vicinity of the supporting structure, the rotor being cantilevered-out on bearings (9, 10) carried by circularly cylindrical surfaces of the shaft.

2. A machine according to claim 1, **characterized by** the fact that the drive surface (15a) is situated at least for the most part around the shaft (16).

3. A machine according to claim 1 or claim 2, **characterized by** the fact that a cable (39) connected to a position sensor (32) travels along the inside of the shaft (6).

4. A machine according to any preceding claim, **characterized by** the fact that the drive surface (15a) includes grooves (22) for receiving cables or belts driven by the machine.

5. A machine according to any preceding claim, **characterized by** the fact that the rotor includes a disk (17) extending perpendicularly to the axis of rotation (x), and by the fact that the supporting structure carries at least one brake (19) including a friction member arranged to bear against the disk (17).

6. A machine according to any preceding claim, **characterized by** the fact that it comprises a removable cap (37) on its side remote from the end of the shaft through which the cable(s) traveling along the inside thereof extend.

7. A machine according to claim 6, **characterized by** the fact that the removable cap covers a rod (34) rotating with the rotor and driving a position sensor pin (33) in rotation.

8. A machine according to claim 7, **characterized by** the fact that the sensor pin (33) includes an opening (45) through which the rod (34) passes.

9. A machine according to any preceding claim, **characterized by** the fact that the rotor has an inner circularly cylindrical surface (13) having permanent magnets (14) fixed thereto.

10. A machine according to any preceding claim, **characterized by** the fact that the stator is bolted to the shaft (6).

11. A machine according to any preceding claim, **characterized by** the fact that the rotor comprises a one-piece body (12) carrying magnets (14), and having grooves (22) machined therein to receive belts or cables that are to be driven by the machine.

12. A machine according to any preceding claim, **characterized by** the fact that the shaft (6) is formed by assembling together two coaxial sleeves (6a, 6b).

## Patentansprüche

1. Elektrische Maschine (1) zum Antrieb eines Aufzugs, eines Rades oder einer Winde, **gekennzeichnet durch**
- ein Traggestell (2),
- einen an dem Traggestell (2) auskragend befestigten Stator (3),
- einen Rotor (4), der an dem Traggestell (2) um eine geometrische Drehachse (X) drehbar derart gelagert ist, so dass er von dem Stator angetrieben werden kann,
wobei das Gestell eine zentrische, zu der geometrischen Drehachse (X) des Rotors koaxiale Hohlwelle (6) aufweist, ein elektrisches Versorgungskabel des Stators im Innern der Welle (6) verläuft und der Rotor eine Antriebsfläche (15a) aufweist, die dazu dient, das Drehmoment auf mindestens ein anzutreibendes, insbesondere in unmittelbarer Nähe des Gestells die Welle mindestens teilweise umgebendes Bauteil, etwa ein Seil oder einen Riemen, zu übertragen, wobei der Rotor in an zylindrischen Drehflächen der Welle angebrachten Lagern (9, 10) auskragend gelagert ist.

2. Maschine nach Anspruch 1, **dadurch gekennzeichnet, dass** die Antriebsfläche (15a) die Welle (6) mindestens größtenteils umgibt.

3. Maschine nach Anspruch 1 oder 2, **dadurch gekennzeichnet, dass** ein mit einem Stellungsgeber (32) verbundenes Seil (39) im Innern der Welle (6) verläuft.

4. Maschine nach einem der vorhergehenden Ansprüche, **dadurch gekennzeichnet, dass** die Antriebsfläche (15a) Rillen (22) zur Aufnahme von von der Maschine angetriebenen Seilen oder Riemen aufweist.

5. Maschine nach einem der vorhergehenden Ansprüche, **dadurch gekennzeichnet, dass** der Rotor eine Scheibe (17) trägt, die senkrecht zu der geometrischen Drehachse (X) verläuft, und dass das Gestell mindestens eine Bremse (19) mit einem an die Scheibe (17) anlegbaren Reibelement trägt.

6. Maschine nach einem der vorhergehenden Ansprüche, **gekennzeichnet durch** eine abnehmbare Haube (37) an der Seite, die von demjenigen Ende der Welle abgewandt ist, an der das oder die in ihrem Innern verlaufenden Kabel austreten.

7. Maschine nach dem vorhergehenden Anspruch, **dadurch gekennzeichnet, dass** die abnehmbare Haube einen Stab (34) verdeckt, der sich mit dem Rotor dreht und eine Achse (33) des Stellungsgebers mitnimmt.

8. Maschine nach Anspruch 7, **dadurch gekennzeichnet, dass** die Achse (33) eine von dem Stab (34) durchsetzte Öffnung (45) aufweist.

9. Maschine nach einem der vorhergehenden Ansprüche, **dadurch gekennzeichnet, dass** der Rotor eine zylindrische Innenfläche (13) aufweist, an der Dauermagnete (14) befestigt sind.

10. Maschine nach einem der vorhergehenden Ansprüche, **dadurch gekennzeichnet, dass** der Stator an der Welle (6) angeschraubt ist.

11. Maschine nach einem der vorhergehenden Ansprüche, **dadurch gekennzeichnet, dass** der Rotor einen einstückigen Körper (12) aufweist, der Magnete (14) trägt und in den Rillen (22) zur Aufnahme von von der Maschine anzutreibenden Riemen oder Seilen eingearbeitet sind.

12. Maschine nach einem der vorhergehenden Ansprüche, **dadurch gekennzeichnet, dass** die Welle (6) aus einer Anordnung von zwei koaxialen Hülsen (6a, 6b) besteht.
